# EUROPEAN PATENT SPECIFICATION

(11) **EP 1 011 989 B1**
(45) Date of publication and mention of the grant of the patent: **10.04.2002**
(21) Application number: 98941904.9
(22) Date of filing: 31.08.1998
(51) Int. Cl.: B60B 31/02, B60B 31/00, B23Q 7/10

(54) **APPARATUS AND METHOD FOR INSERTING SPOKES IN HOLES OF A HUB FLANGE**
VERFAHREN UND VORRICHTUNG ZUM EINBRINGEN VON SPEICHEN EINES NABENFLANSCHES
APPAREIL ET PROCEDE D'INSERTION DE RAYONS DANS LES TROUS D'UN FLASQUE DE MOYEU

(30) Priority: 10.09.1997 NL 1006988; 19.12.1997 NL 1007853
(43) Date of publication of application: 28.06.2000
(73) Proprietor: HOLLAND MECHANICS B.V., 1442 PZ Purmerend (NL)
(72) Inventor: CRUYFF, Marcel, NL-1127 PH Den Ilp (NL); BRUGGE, Henk, NL-1463 KP Noord Beemster (NL); ADMIRAAL, Antonius, Simon, NL-1906 CT Limmen (NL)
(74) Representative: Van Breda, Jacobus
(86) International application number: NL9800489
(87) International publication number: WO9912754

(56) References cited:
- EP-A- 0 424 050
- WO-A-95/03184
- DE-A- 3 103 552
- FR-A- 2 507 969
- GB-A- 1 388 756

## Description

The invention relates to an apparatus for inserting spokes into holes of a hub flange according to the preamble of claim 1.

Such an apparatus is known from EP A 0424050. The disadvantage of the known apparatus is that the spoke is not guided sufficiently accurately with respect to the ejection opening. The objective of the spring valve that can be seen in the known apparatus is that it gives the air flow a high velocity when ejecting the spoke and the spring valve does not rest against the spoke, allowing the same to assume different positions with respect to the ejection opening. There is very little play around the spoke in the hole of the hub flange, for instance, less than 0.5 mm so that, due to the play of the spoke in the ejection opening, positioning of the spoke is not sufficiently accurate, with the result that the spoke may strike the rim of the hole or that the thread on the shaft of the spoke sometimes catches on the rim of the hole, causing defects.

In order to eliminate this drawback the apparatus is embodied in accordance with the characterizing part of claim 1.

In accordance with a further improvement, the apparatus is embodied in accordance with claim 2. This embodiment prevents the spokes falling into and being caught in the spoke holder from jamming against the spoke guiding means if they are somewhat bent, even though they are unable to rotate around their longitudinal axis.

In accordance with an improvement, the apparatus is embodied according to claim 3. Such an embodiment is simple as it requires no active control for the press-on means. In accordance with a further improvement the apparatus is embodied according to claim 4. This embodiment allows the spoke to be supplied head down so that after insertion the spokes fall down with the shaft. The result is that the spokes, after insertion, hang down so that they will not jam and cause defects while being rotated in the hub support.

In accordance with one embodiment the apparatus is embodied according to claim 5. This embodiment allows for sufficient space to catch the spokes, while they are unable to rotate in the spoke channel. In accordance with a further improvement the apparatus is embodied according to the characterizing part of claim 6. In this embodiment the spoke channel is closed at four sides during insertion, so that the spoke is guided properly. In the apparatuses of the prior art it is not possible to bring the ejection openings close to the hub flange in front of the holes through which the spokes have to be inserted outward from between the hub flanges. The spoke holders then jam against the flanges if the direction of insertion is more or less in the longitudinal direction of the hole in the hub flange, which is necessary if there is little play between a spoke and a hole in the hub flange.

In order to avoid the above drawback, the apparatus in accordance with a further improvement is embodied according to claim 7. This makes it possible to insert the spoke close to a hub flange into a hole in the overlying flange.

In accordance with a further improvement the apparatus is embodied according to claim 8. This allows the ejection opening to be moved to the hole in the overlying flange in a straight line, allowing the spoke holder to be moved to the hub flange.

In accordance with a further improvement of the invention, the apparatus is embodied according to claim 9. To insure that the spoke falls properly after insertion, it is essential that the head points down. This can be guaranteed by positioning the spoke with the head pointing downward.

In accordance with one embodiment the apparatus is embodied according to claim 10. This is a simple manner of positioning the spoke in the desired manner.

During loading the hub rotates, always positioning the next hole in front of the inserter, with the inserted spokes projecting from the holes in the hub flanges. In the prior art apparatus these spokes may come into contact with the hubs that are presented, which may cause a defect.

In order to avoid the above-mentioned drawback, the apparatus is embodied according to claim 11. After the loaded hub is removed, the hubs can be conveyed conveniently by using a gripper.

In accordance with one embodiment the apparatus is embodied according to claim 12. In this embodiment the hub is unambiguously positioned in the axial direction irrespective of the width of the hub, thereby facilitating the positioning on the hub support.

In the prior art apparatus where the rotation means comprise a drive roll pushing against the hub flange, the spokes are inserted at the top side of the hub flanges.
This results in some of the spokes falling onto the hub axle which means that the spokes may become jumbled and cause a defect.

In accordance with one embodiment the apparatus is embodied according to claim 13. This embodiment allows the spokes to fall freely without touching the hub or the drive roll.

In accordance with another improvement the invention is embodied according to the characterizing part of claim 15. In this embodiment the hub support can be simply adjusted for a hub of different dimensions, while hubs of the same dimensions can be fitted quickly into the apparatus.

In accordance with another improvement the invention is embodied according to claim 16. This embodiment allows simple adjustment to another hub dimension by bringing both adjustable spoke inserters together onto the correct position.

The invention also comprises a method using an apparatus according to one of the claims 1 to 16. As previously mentioned, a similar method is known from EP A 0424050. The disadvantage with the known method is that it is not always certain that the spoke, after it has been inserted, will hang head down so that the bend in the shaft can turn through the hole in the hub flange, allowing the shaft to fall through. If the head points upward, it will rest on the hub flange and the weight of the shaft will pull the bend out of the hub flange with the result that the shaft will not fall through.

In order to avoid the above-mentioned drawback, insertion is carried out in accordance with the features of claim 17. Guiding the spoke's downward pointing head until the spoke's shaft, after having been inserted, can fall through at the other side of the hub flange, will prevent the head from turning upward, which would hinder the shaft's falling through.

In the prior art method, after a spoke has been inserted into a hole of the first hub flange a next hole in the second hub flange is brought before the insertion position by rotating the hub flange in such a way as to move the inserted spoke downward. In this way the inserted spokes do not interfere with holes whose positions have still to be detected. If, due to loose flanges or manufacturing faults the holes in the two flanges are not staggered in the usual way, but are in the direction of rotation positioned close together, then the next hole is not easily detectable.

In order to avoid this drawback the method is carried out in accordance with claim 18. This method ensures that the next hole is found, even if it is at the same rotation position as the loaded hole in the other hub flange.

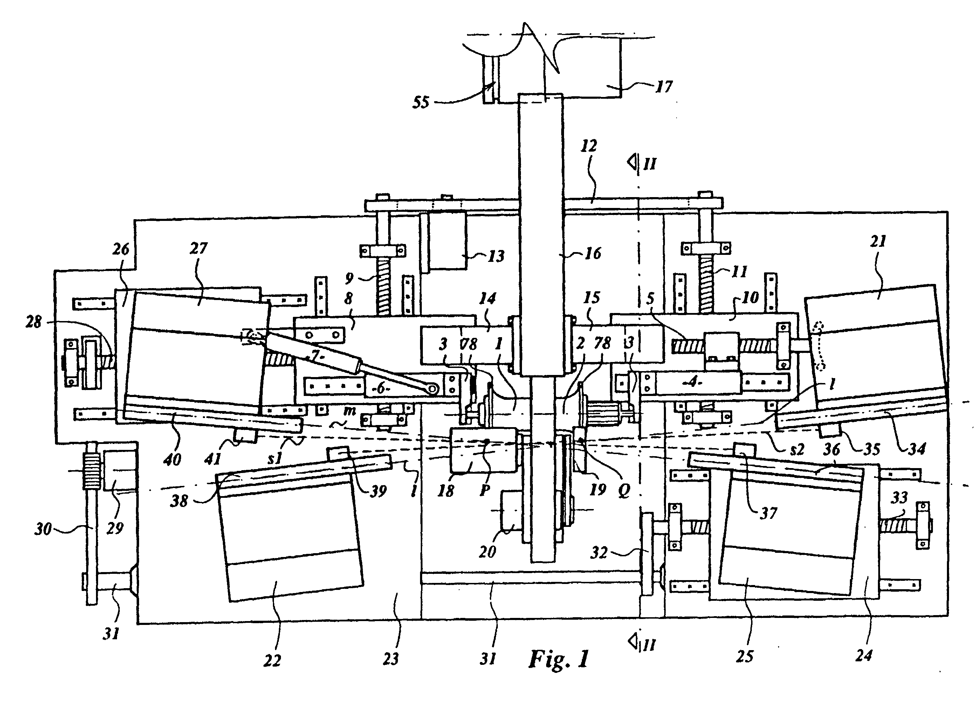

The invention will now be elucidated with reference to a few exemplary embodiments which will be discussed with the assistance of drawings in which
Figure 1 shows the top view of a hub loader according to the invention,
Figure 2 shows a side view according to II-II of the hub loader of Figure 1,
Figure 3 shows a side view of an embodiment of a spoke sorter,
Figure 4 shows a schematic side view of a first embodiment of a spoke holder as applicable in the apparatus according to Figure 1,
Figure 5 shows the cross section V-V of Figure 4,
Figure 6 shows the ejection opening of the spoke holder according to Figure 4,
Figure 7 shows the cross section VII-VII of Figure 6,
Figure 8 shows the ejection opening after a spoke has been inserted through the hole in a hub flange,
Figure 9 shows a hub flange with an inserted spoke,
Figure 10 shows a schematic side view of a second embodiment of the spoke holder according to Figure 4,
Figure 11 shows the cross section XI-XI of Figure 10, and
Figure 12 shows the cross section XII-XII of Figure 10.

The figures are schematic representations of the various parts in which the known and standard constructions such as, for instance, drive cylinders, fastenings and the like are not always shown. Wherever possible, corresponding parts in the various figures carry the same reference numbers.

A hub 1 to be loaded with spokes and having a hub axle 2 is supported by a hub support 3 comprising two parts. The first part of the hub support 3 is attached to a carriage 4 which is movable in the direction of the hub axle 2 by means of manual adjustment 5. In another embodiment the manual adjustment 5 is replaced by a stepping motor which is coupled to the control. This allows simple adjustment of the apparatus to a hub of a different dimension, provided this dimension is known to the control.

The second part of the hub support 3 is attached to a carriage 6 which is also movable in the direction of the hub axle 2 by means of an air cylinder 7. The carriage 6 is attached to a carriage 8 which is movable by means of a first positioning spindle 9 in a direction perpendicular to the direction of the hub axle 2, and the carriage 4 is attached to a movable carriage 10 which is movable by means of a second positioning spindle 11 in a direction perpendicular to the hub axle 2. The carriages 8 and 10 are mounted to a frame 23 by means of guides.

The positioning spindles 9 and 11 are coupled by means of a cogged belt 12 and are driven by a drive 13. The carriages 8 and 10 are provided with supports 14 and 15 to which a gripping support 16 is fastened. In the gripping support 16 a gripper is movably mounted as will be discussed hereinbelow, for the conveyance of the hubs to be loaded from an apron feeder 17 to the hub support 3.

Also attached to the gripping support are a motor 20 with a wide driving roll 18 and a narrow driving roll 19. These driving rolls make the hub 1 rotate around the hub axle 2, thereby positioning the holes 81 in hub flanges 78 in a first location point P or a second location point Q. In order to position the holes 81 on the location points P and Q, the motor 20 and the drive 13 are controlled by a control (not shown) and with the aid of sensors to be discussed hereinbelow. With hubs 1 whose holes 81 are at a constant radius it is not necessary to always use the drive 13, and it suffices to locate the holes 81 by rotating the hub 1 around the hub axle 2. With poor hubs the position of the hub axle 2 can also be adjusted for each hole 81 by using the drive 13.

The first location point P is adjustable to the width of the hub 1 and has an adjustable feed direction m. Through this location point P the spokes are supplied to the outside of the hub flange 78 by means of an adjustable spoke inserter 27 and a spoke holder 40, and to the inside of the hub flange 78 by means of an adjustable spoke inserter 25 and a spoke holder 36. A sensor beam S1 determines whether or not the hole 81 of the flange 78 is positioned in the location point P, the sensor beam S1 runs from a sender 37 to a receiver 41. The position of the spoke inserters 25 and 27 is adjustable because they are mounted on a carriage 24 or 26 respectively. These carriages 24 and 26 are mounted with guides on the frame 23, and are movable in the direction of the hub axle 2. To this end they are coupled via a spindle 28, a cogged belt 30, an axle 31, a cogged belt 32 and a spindle 33, and are driven by a motor 29. This apparatus is used when a hub 1 of different dimensions has to be loaded with spokes. The sender 37 and the receiver 41 are also directed at the location point P because they are adjusted simultaneously with the spoke inserter.

The second location point Q is stationary and has a fixed feed direction 1. Through this location point Q the spokes are fed to the outside of the hub flange 78 by a stationary spoke inserter 21 and a spoke holder 34, and to the inside of the hub flange 78 by a stationary spoke inserter 22 and a spoke holder 38. A sensor beam S2 detects whether or not the hole 81 of the flange 78 is positioned in the location point Q, the sensor beam S2 runs from a sender 35 to a receiver 39.

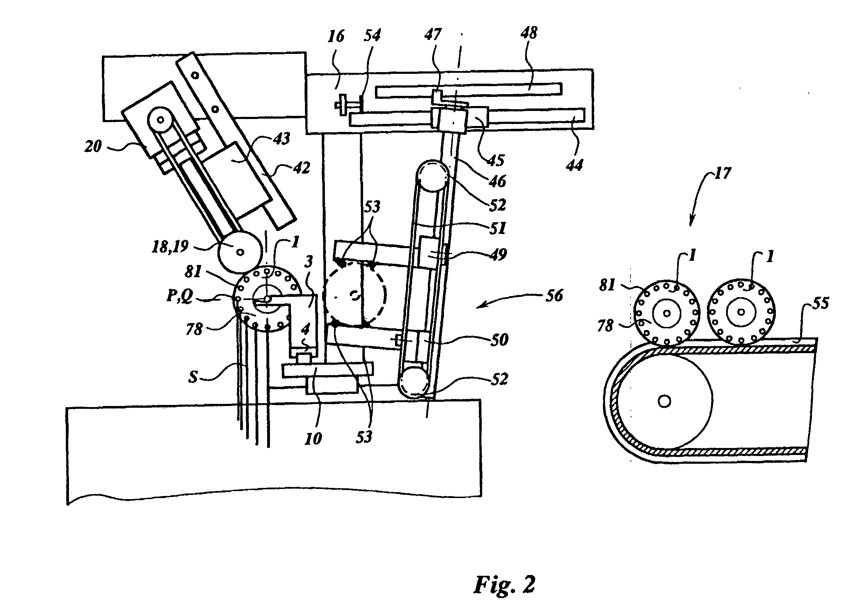

Figure 2 shows the hub 1 resting on the hub support 3. The driving rolls 18, 19 push the hub 1 into the hub support 3 by means of an air cylinder which is not shown, with the driving rolls 18, 19 and the motor 20 with a carriage 43 are able to move along the guide. The drive rolls 18, 19 are located above location points P and Q, so as not to interfere with the inserted spokes S hanging down.

To carry the hubs from the apron feeder 17 to the hub support 3, a gripper 56 is applied. A carriage 45 moves along a guide 44 under the influence of an air cylinder (not shown). In the carriage 45 a rotatably mounted gripper shaft 46 is provided whose rotation is controlled by a cam 47 and a guide plate 48. The movement along the carriage 44 causes the gripper shaft 46 to rotate, directing the gripper 56 alternately to the hub support 3 or the apron feeder 17. An upper clamp 49 and a lower clamp 50 can be moved up and down by means of an air cylinder, the movement being coupled via a cogged belt 51 and discs 52. This ensures that the middle between grip rollers 53 always stays at the same height. A buffer 54 ensures that the gripper always stops at the same place, so that the centre of the presented hub is positioned exactly correctly with respect to the hub support 3. The apron feeder 17 is provided with a flange guide 55, so that always at least one flange 78 is positioned in the same place, so that it is in the correct position with respect to the grip rollers 53.

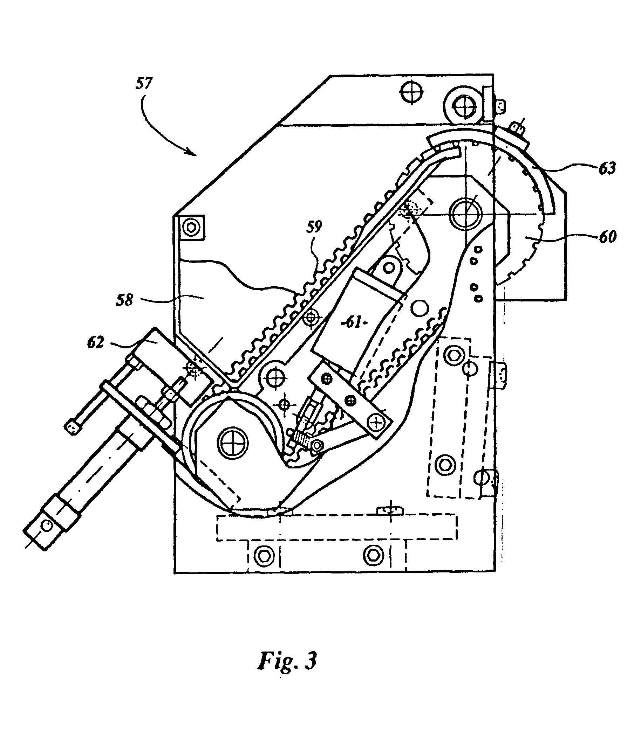

Figure 3 shows an embodiment of a spoke sorter 57. A container holds a supply of spokes 58, which supply is lifted therefrom by means of a wide double-sided cogged belt 59. The belt is driven by an intermittent drive 61 conveying pitch by pitch. A pusher 62 is provided to prevent the spokes becoming a solid bundle.

Between the cogs of the belt 59 one or more spokes may be deposited. At the top, surplus spokes between the cogs are pushed out by a push-out disc 60, leaving always one spoke between the push-out disc 60 and the cap 63.

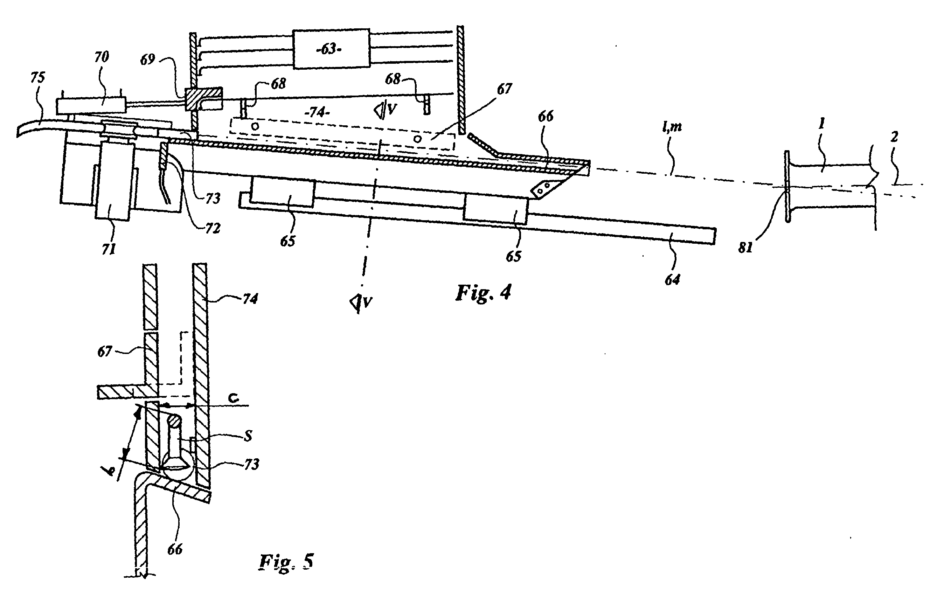

Figures 4 and 5 show schematically how the spoke holder works. The spokes under the cap 63 of the spoke sorter are in position for use. After a signal a spoke falls into the aligning position and remains lying on the two pawls 68. Subsequently an alignment head 69 moves toward the spoke to direct the head downward. The alignment head is moved by means of a cylinder 70. The pawls 68 are mounted on a spoke holder wall 74. The pawls 68 release the spoke which falls on the spoke holder floor 66 which has a slight incline so that the spoke does not bounce, or bounces only a little. The spoke holder with carriages 65 then moves along a guide 64 to the hub flange 78. The guide 64 runs in the feed direction l or m. When feeding, the spoke holder is moved so close to the hub flange that it almost abuts.

When the spoke is lying on the spoke holder floor 66, it is locked in at the top side by means of a enclosing element 67. This may be a bent-over plate or some pegs, which prevent the spoke from moving upward. There is some play, in the region of 1-2 mm, around the spoke in the spoke holder so that a bent spoke will not jam. In addition, the spoke holder is shaped such that the head of the spoke can easily slide along the sides without jamming. The width c of the spoke holder channel is as large as possible. Near the floor 66 said width is less than the biggest dimension b perpendicular to the shaft of the spoke. This prevents the spoke from rotating once it has been aligned by the alignment head 69.

The spoke is pushed into feed direction by a belt 75 driven by a motor 71 and a rubber roll mounted thereon. The head of the belt is provided with a metal part 73 which can be detected by the sensor 72 and which pushes on the head of the spoke S.

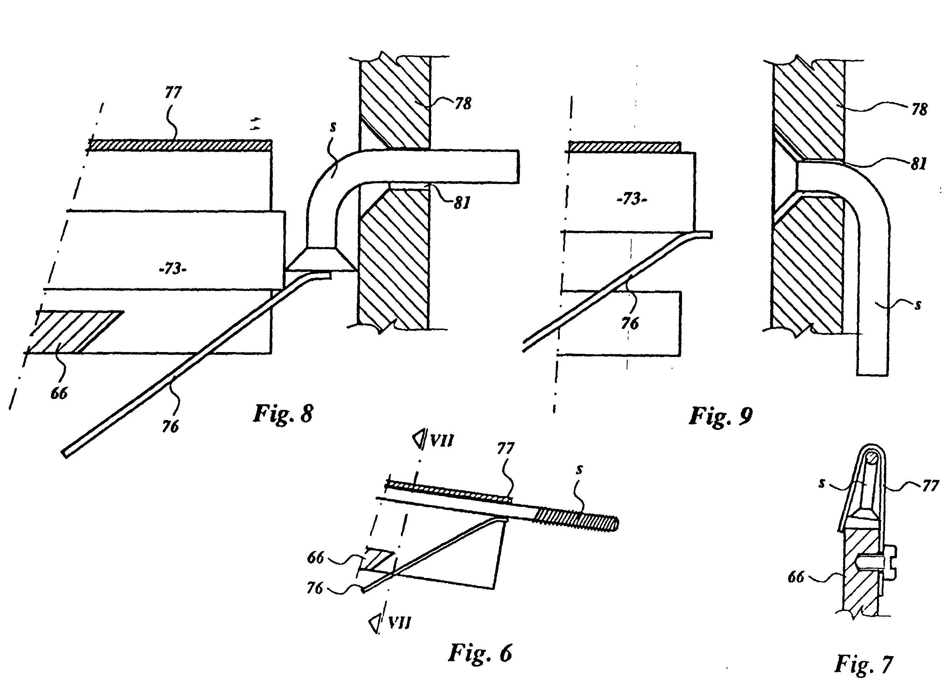

Figures 6 and 7 show how the spoke S is accurately positioned at the ejection opening at the end of the spoke holder. To this end the spoke S is pushed by a leaf spring 76 against a guide plate 77. The guide plate is made of thin strong steel with a thickness of less than 1,0 mm and preferably less than 0,5 mm, and is shaped as shown, in order to allow the spoke holder to be guided closely past the hub flanges 78. At the top also the guide is very thin, so that the spoke holder can also be guided under the rolls 18 and 19.

Figures 8 and 9 show how to ensure that during insertion the head of the spoke S stays downward, in order for the spoke S with the right-angled head to turn through the hole 81 in a hub flange 78 under the influence of the spoke's S weight. The metal part 73 of the belt pushes the head of the spoke against the flange 78. The head of the spoke S comes free from the guide only during the last portion, which ensures that the head stays pointing downward. The leaf spring 76 pushes the head upward which, together with the weight of the spoke S, causes it to turn downward through the hole 81 in the flange 78.

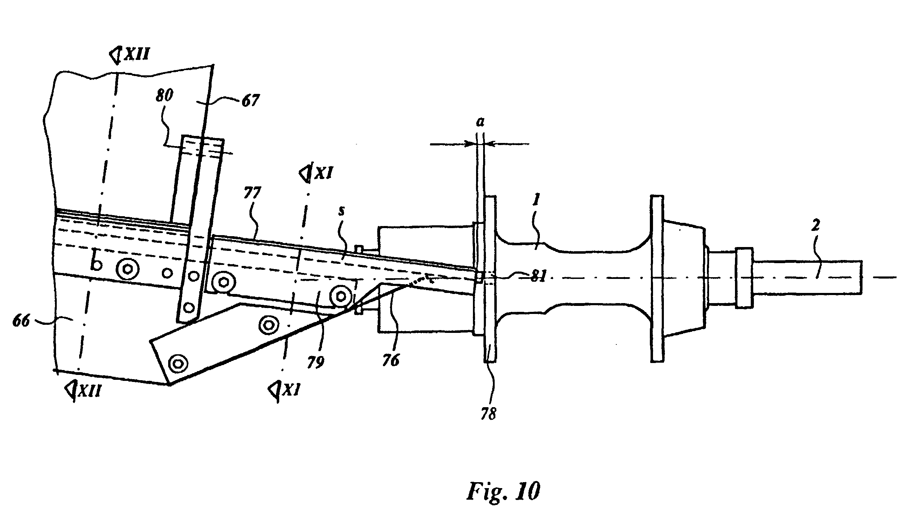

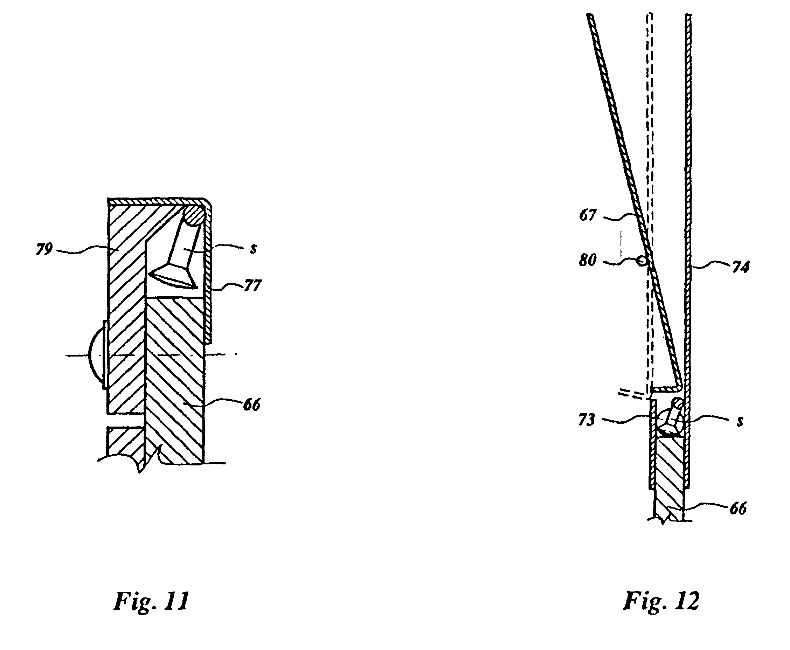

The Figures 10, 11 and 12 show a second embodiment of a spoke holder in a position where the spoke S is placed before the hole 81 in the hub flange 78. The leaf spring 76 pushes the spoke S against the guide plate 77. In this embodiment the guide plate 77 is fastened to the spoke holder floor 66 and a support strip 79. As shown in Figure 10, the guide plate 77 and the support strip 79 form a channel of which the underside, the side facing the hub 1, is open to allow the spring 76 to push against the shaft of the spoke S, positioning it accurately. The spoke holder is positioned at a distance a from the hub flange 78, and a is smaller than the diameter of the head of the spoke, for example less than 3 mm. After the spoke S has fallen head down onto the spoke holder floor 66, the confining element 67 is tilted around an axle of tilt 80. In another embodiment the confining element 67 is tilted while the spoke S is falling, causing the same to jam between the confining element 67 and the spoke holder wall 74. The confining element 67 is then slowly opened and the spoke S falls onto the spoke holder floor 66 without bouncing. Then the confining element 67 is closed again. The spoke S is then pushed by the metal part 73 through the hole 81 in the hub flange 78. While the spoke S is being pushed through the hole 81, forces are exerted on the spoke which would cause the same to rotate around its longitudinal axis. To prevent this, the guide plate 77 and the support strip 79 extend to close to the hub flange 78.

The support strip 79 and the spring 76 are designed such that the position of the spoke's shaft before insertion is determined accurately. During insertion the spring 76 must be able to deflect in order to allow the head of the spoke to pass. In another embodiment the spring 79 may be replaced by an excited pawl, which is excited via the control by means of electricity or compressed air.

To load a flange 78 with spokes from both sides, the spoke holder is brought to a distance a of less than 3 mm from the hub flange 78. This means that two of the four spoke holders must be able to move past a flange 78 in the feed direction l or m. The distance between the flanges 78 may, for example, be 8 to 12 cm. By designing the two respective spoke holders such that over at least 40 mm, or optionally over at least 80 mm, they are very narrow by using a very thin guide plate 77, the respective spoke holder is able to move past the hub flange. The feed directions l and m then create an angle of about 10° with a plane through the hub axis 2.

## Claims

1. An apparatus for inserting spokes (S) having a right-angled head and a shaft into holes (81) of hub flanges (78) of a hub (1) comprising a hub support (3) for the support of the hub (1) in horizontal position, rotation means (18, 19, 20) for rotating the hub around a hub axle (2), sensors (35, 37, 39, 41) for detecting the holes in the hub flanges (78), spoke inserters (21, 22, 25, 27) positioned at either side of the hub (1), which comprise spoke sorters (57) for the separation of always one single spoke, a spoke holder (34, 36, 38, 40) movable between a spoke catching position and an insertion position, in which a separated spoke can be caught and which is provided with spoke guiding means (66, 67, 74, 77, 79) and an ejector opening for guiding the spoke during insertion and drive means (71, 73, 75) for moving a spoke (S) from the spoke holder (34, 36, 38, 49) through a hole (81), positioning means for the sensor-aided positioning of the holes (81) in the hub flange (78) and the ejector opening in relation to one another, and control means for controlling the apparatus said ejector opening comprising a spoke support (77) and press-on means (76), which press-on means can be swung aside to allow the head of the spoke to pass, **characterized in that** said press-on means (76) is suitable for, during insertion, pushing the shaft of the spoke (S) against the spoke support (77).

2. An apparatus for inserting spokes according to claim 1, **characterized in that** the spoke channel formed by the spoke guiding means is as wide as possible while being narrower than the biggest dimension (b) of the spoke head perpendicular to the shaft, so that the spoke is unable to rotate in the channel.

3. An apparatus for inserting spokes according to claim 1 or 2, **characterized in that** the press-on means comprise a springy element (76) such as, for instance, a leaf spring.

4. An apparatus for inserting spokes according to claim 1, 2 or 3, **characterized in that** the spoke support (77) is positioned above the springy element.

5. An apparatus for inserting spokes according to one of the preceding claims, **characterized in that** at the drive side where the spoke is caught, the dimension of the spoke channel is approximately 5 x 8 mm.

6. An apparatus for inserting spokes according to one of the preceding claims, **characterized in that** at the drive side the spoke channel is provided with movable guiding means (67) for closing and opening the spoke channel at its tip side.

7. An apparatus for inserting spokes according to one of the preceding claims, **characterized in that** over a distance of at least 40 mm from the ejection opening, the spoke guiding means are formed by a wall which, at the side facing the hub, has a thickness of less than 0.5-1.0 mm.

8. An apparatus for inserting spokes according to one of the preceding claims, **characterized in that** over a distance of at least 80 mm from the ejection opening, the spoke guiding means are formed by a wall which, at the side facing the hub, has a thickness of less than 0.5-1.0 mm.

9. An apparatus for inserting spokes according to one of the preceding claims, **characterized in that** a spoke turner (69, 70) is provided between the spoke sorting means and the spoke holder, for turning the head of a separated spoke downward.

10. An apparatus for inserting spokes according to claim 9, **characterized in that** the spoke turner comprises catching means (68) for a separated spoke, and alignment means (69) capable of moving to the head of the caught spoke.

11. An apparatus for inserting spokes according to one of the preceding claims, **characterized in that** the hubs (1) are conveyed to the hub support (3) by conveyor

12. An apparatus for inserting spokes according to claim 11, **characterized in that** the gripper has clamping means (49-53) for a hub flange (78).

13. An apparatus for inserting spokes according to one of the preceding claims wherein the rotation means comprise a drive roll (18, 19) pushing against the hub flange (78), **characterized in that** for every hub flange (78) the spoke guide means, the ejector openings and the respective sensors (35, 37, 39, 41) are directed at a location hole (P, Q) which lies on a horizontal plane through the hub axle (2), and the drive roll (18, 19) pushes against the hub flange (78) above said horizontal plane.

14. An apparatus for inserting spokes according to claim 13, **characterized in that** the drive roll pushes against the hub flange (78) in a direction of approximately 45 to 75 degrees in relation to the horizontal plane.

15. An apparatus for inserting spokes according to one of the preceding claims, **characterized in that** the hub support (3) comprises two axle supports, of which a first axle support is adjustable to a position which depends on the dimensions of a hub (1), and of which a second axle support, by means of a support drive (7), pushes each hub (1) to be loaded against the first axle support.

16. An apparatus for inserting spokes according to one of the preceding claims, **characterized in that** two spoke inserters (21, 22) and the respective sensor are located at a fixed position in relation to the hub support (3), while two spoke inserters (25, 27) and the respective sensor are movable by conveyor means (28, 33), with the distance between the spoke inserters remaining constant.

17. A method for inserting spokes (S) into holes (81) of a hub flange (78) of a hub (1) using an apparatus according to one of the preceding claims, the horizontally supporting hub support (3), with the hub flange being provided at either side with the spoke inserters (21, 22, 25, 27) wherein by means of the spoke sorters (57) a spoke (S) having a right-angled head and a shaft is separated and caught in the spoke holder (34, 36, 38, 40), which during insertion guides the spoke with the aid of the spoke guiding means (66, 67, 74, 77, 79) terminating in the ejector opening, while, after the hole (81) and the ejector opening in relation to one another have been positioned with the aid of a sensor and the control means such as to substantially align the hole (81) with the shaft of the spoke, the drive means (71, 73, 75) push the spoke from the ejector opening through the hole (81) into the hub flange (78), the ejector opening is moved toward the hub flange (78) to a distance (a) from the hub flange which is smaller than the diameter of the head of the spoke, after which the spoke (S) is inserted through the hole (81) in the hub flange (78) while ensuring, by guiding the head until it abuts against the hub flange (78), that during insertion the head remains pointing downward.

18. A method according to claim 17 in which, after a spoke (S) has been inserted into a hole (81) of the first hub flange (78) a next hole (81) in the second hub flange (78) is brought before the insertion position by rotating the hub (1) in such a way as to move the inserted spoke downward, **characterized in that** first of all the hub (1) is rotated over 0.5-1 hole diameter in the opposite direction.

## Patentansprüche

1. Vorrichtung zum Einsetzen von Speichen (S), die einen rechtwinkligen Kopf und einen Schaft haben, in Löcher (81) von Nabenflanschen (78) einer Nabe (1), umfassend eine Nabenauflage (3) für das Halten der Nabe (1) in horizontaler Stellung, Drehmittel (18, 19, 20), um die Nabe um eine Nabenachse (2) zu drehen, Sensoren (35, 37, 39, 41), um die Löcher in den Nabenflanschen (78) zu finden, Speicheneinsetzer (21, 22, 25, 27), an jeder Seite der Nabe (1) angeordnet, welche Speichensortierer (57) umfassen für die Abtrennung von immer einer einzigen Speiche, einen Speichennalter (34, 36, 38, 40), der zwischen einer Speichenfangstellung und einer Einsetzstellung beweglich ist, in welchen eine abgetrennte Speiche gefangen werden kann und der mit Speichenführungsmitteln (66, 67, 74, 77, 79) und einer Auswerferöffnung vorgesehen ist, um die Speiche während des Einsetzens zu führen, und Antriebsmitteln (71, 73, 75), um eine Speiche (5) von dem Speichenhalter (34, 36, 38, 49) durch ein Loch (81) zu bewegen, Anordnungsmitteln für die sensorunterstützte Anordnung der Löcher (81) in dem Nabenflansch (78) und der Auswerferöffnung zueinander, und Regelmitteln zum Regeln der Vorrichtung, wobei die Auswerferöffnung eine Speichenauflage (77) und Aufdrückmittel (76) umfasst und das Aufdrückmittel (76) seitwärts geschwenkt werden kann, um den Kopf der Speiche vorbeigehen zu lassen, **dadurch gekennzeichnet, dass** das Aufdrückmittel (76) geeignet ist, um während des Einsetzens den Schaft der Speiche (S) gegen die Speichenauflage (77) zu drücken.

2. Vorrichtung zum Einsetzen von Speichen nach Anspruch 1, **dadurch gekennzeichnet, dass** die Speichennut, die durch die Speichenführungsmittel geformt ist, so breit wie möglich ist, wobei sie enger ist als die größte Abmessung (b) des Speichenkopfes rechtwinklig zu dem Schaft, so dass die Speiche sich nicht in der Nut drehen kann.

3. Vorrichtung zum Einsetzen von Speichen nacn Anspruch 1 oder 2, **dadurch gekennzeichnet, dass** das Aufdrückmittel ein federndes Element (76), wie beispielsweise eine Blattfeder, umfasst.

4. Vorrichtung zum Einsetzen von Speichen nach Anspruch 1, 2 oder 3, **dadurch gekennzeichnet, dass** die Speichenauflage (77) über dem federnden Element angeordnet ist.

5. Vorrichtung zum Einsetzen von Speichen nach einem der vorhergehenden Ansprüche, **dadurch gekennzeichnet, dass** an der Antriebsseite, wo die Speiche gefangen wird, die Abmessung der Speichennut etwa 5 x 8 mm ist.

6. Vorrichtung zum Einsetzen von Speichen nach einem der vorhergehenden Ansprüche, **dadurch gekennzeichnet, dass** die Speichennut an der Antriebsseite mit beweglichen Führungsmitteln (67) zum Schließen und öffnen der Speichennut an ihrer Spitzenseite versehen ist.

7. Vorrichtung zum Einsetzen von Speichen nach einem der vorhergehenden Ansprüche, **dadurch gekennzeichnet, dass** über eine Entfernung von wenigstens 40 mm von der Auswurföffnung die Speichenführungsmittel durch eine Wand geformt sind, die an der Seite, die der Nabe zugewandt ist, eine Dicke von weniger als 0,5 - 1,0 mm hat.

8. Vorrichtung zum Einsetzen von Speichen nach einem der vorhergehenden Ansprüche, **dadurch gekennzeichnet, dass** über eine Entfernung von wenigstens 80 mm von der Auswurföffnung die Speichenführungsmittel durch eine Wand geformt sind, die an der Seite, die der Nabe zugewandt ist, eine Dicke von weniger als 0,5 - 1,0 mm hat.

9. Vorrichtung zum Einsetzen von Speichen nach einem der vorhergehenden Ansprüche, **dadurch gekennzeichnet, dass** ein Speichendreher (69, 70) zwischen dem Speichensortiermittel und dem Speichenhalter vorgesehen ist, um den Kopf einer abgetrennten Speiche abwärts zu drehen.

10. Vorrichtung zum Einsetzen von Speichen nach Anspruch 9, **dadurch gekennzeichnet, dass** der Speichendreher ein Fangmittel (68) für eine abgetrennte Speiche und ein Ausrichtmittel (69), das den Kopf der gefangenen Speiche bewegen kann, umfasst.

11. Vorrichtung zum Einsetzen von Speichen nach einem der vorhergehenden Ansprüche, **dadurch gekennzeichnet, dass** die Naben (1) durch Fördermittel (17, 56), die einen Greifer (56) umfassen, zu der Nabenauflage (3) befördert werden.

12. Vorrichtung zum Einsetzen von Speichen nach Anspruch 11, **dadurch gekennzeichnet, dass** der Greifer Klemmmittel (49-53) für einen Nabenflansch (78) hat.

13. Vorrichtung zum Einsetzen von Speichen nach einem der vorhergehenden Ansprüche, wobei die Drehmittel eine Antriebsrolle (18, 19) umfassen, die gegen den Nabenflansch (78) drückt, **dadurch gekennzeichnet, dass** für jeden Nabenflansch (78) die Speichenführungsmittel, die Auswerferöffnungen und die jeweiligen Sensoren (35, 37, 39, 41) zu einem Festlegungsloch (P, Q) gerichtet sind, das auf einer horizontalen Ebene durch die Nabenachse (2) liegt, und die Antriebsrolle (18, 19) gegen den Nabenflansch (78) über der horizontalen Ebene drückt.

14. Vorrichtung zum Einsetzen von Speichen nach Anspruch 13, **dadurch gekennzeichnet, dass** die Antriebsrolle in einer Richtung von etwa 45 bis 75 Grad zu der horizontalen Ebene gegen den Nabenflansch (78) drückt.

15. Vorrichtung zum Einsetzen von Speichen nach einem der vorhergehenden Ansprüche, **dadurch gekennzeichnet, dass** die Nabenauflage (3) zwei Achsenaufnahmen umfasst, von denen eine erste Achsenaufnahme zu einer Stellung, die von den Abmessungen einer Nabe (1) abhängt, einstellbar ist, und von denen eine zweite Achsenaufnahme mittels eines Auflagenantriebes (7) jede Nabe (1), die beladen werden soll, gegen die erste Achsenaufnahme drückt.

16. Vorrichtung zum Einsetzen von Speichen nach einem der vorhergehenden Ansprüche, **dadurch gekennzeichnet, dass** zwei Speicheneinsetzer (21, 22) und der jeweilige Sensor in einer festen Stellung zu der Nabenauflage (3) angeordnet sind, während zwei Speicheneinsetzer (25, 27) und der jeweilige Sensor durch Fördermittel (28, 33) beweglich sind, wobei die Entfernung zwischen den Speicheneinsetzern konstant bleibt.

17. Verfahren zum Einsetzen von Speichen (S) in Löcher (81) eines Nabenflansches (78) einer Nabe (1) unter Verwendung einer vorrichtung nach einem der vorhergehenden Ansprüche, wobei die horizontal haltende Nabenauflage (3) mit dem Nabenflansch an jeder Seite mit den Speicheneinsetzern (21, 22, 25, 27) vorgesehen ist, wobei mittels der Speichensortierer (57) eine Speiche (S), die einen rechtwinkligen Kopf und einen Schaft hat, abgetrennt wird und in dem Speichenhalter (34, 36, 38, 40) gefangen wird, welcher während des Einsetzens die Speiche mit Hilfe der Speichenführungsmittel (66, 67, 74, 77, 79), die in der Auswerferöffnung enden, führt, wobei, nachdem das Loch (81) und die Auswerferöffnung mit Hilfe eines Sensors und der Regelmittel zueinander angeordnet worden sind, um das Loch (81) im Wesentlichen mit dem Schaft der Speiche auszurichten, die Antriebsmittel (71, 73, 75) die Speiche von der Auswerferöffnung durch das Loch (81) in den Nabenflansch (78) drücken, die Auswerferöffnung zu dem Nabenflansch (78) zu einer Entfernung (a) von dem Nabenflansch bewegt wird, welche kleiner ist, als der Durchmesser des Kopfes der Speiche, wonach die Speiche (S) durch das Loch (81) in den Nabenflansch (78) eingesetzt wird, wobei durch Führen des Kopfes, bis er gegen den Nabenflansch (78) stößt, sichergestellt wird, dass der Kopf während des Einsetzens weiterhin abwärts zeigt.

18. Verfahren nach Anspruch 17, wobei, nachdem eine Speiche (S) in ein Loch (81) des ersten Nabenflansches (78) eingesetzt worden ist, ein nächstes Loch (81) in dem zweiten Nabenflansch (78) durch Drehen der Nabe (1) in einer solchen Weise, dass die eingesetzte Speiche abwärts bewegt wird, vor die Einsetzstellung gebracht wird, **dadurch gekennzeichnet, dass** die Nabe (1) zu allererst über einen 0,5 - 1 Lochdurchmesser in der entgegengesetzten Richtung gedreht wird.

## Revendications

1. Dispositif destiné à introduire des rayons (S), présentant une tête à angle droit et une tige, dans des orifices (81) de brides de moyeu (78) d'un moyeu (1) comprenant un support de moyeu (3) destiné à supporter le moyeu (1) en position horizontale, des moyens d'entraînement en rotation (18, 19, 20) destinés à faire tourner le moyeu autour d'un axe de moyeu (2), des capteurs (35, 37, 39, 41) destinés à détecter les orifices dans les brides de moyeu (78), des éléments d'introduction de rayons (21, 22, 25, 27) positionnés de chaque côté du moyeu (1), qui comprennent des éléments de tri de rayons (57) destinés en permanence à isoler un seul rayon, un support de rayon (34, 36, 38, 40) pouvant être déplacé entre une position de saisie de rayon et une position d'introduction, dans lequel un rayon isolé peut être saisi et qui comporte des moyens de guidage de rayon (66, 67, 74, 77, 79) et une ouverture d'éjecteur destinés à guider le rayon au cours de l'introduction et des moyens d'entraînement (71, 73, 75) destinés à déplacer un rayon (S) depuis le support de rayon (34, 36, 38, 49) à travers un orifice (81), des moyens de positionnement destinés à assurer le positionnement assisté par capteur des orifices (81) dans la bride de moyeu (78) et de l'ouverture d'éjecteur les unes par rapport aux autres, et un moyen de commande destiné à commander le dispositif, ladite ouverture d'éjecteur comprenant un support de rayon (77) et un moyen d'application (76), lequel moyen d'application peut être basculé latéralement afin de permettre le passage de la tête du rayon, **caractérisé en ce que** ledit moyen d'application (76) est adapté pour, au cours de l'introduction, pousser la tige du rayon (S) contre le support de rayon (77).

2. Dispositif d'introduction de rayons selon la revendication 1, **caractérisé en ce que** le canal de rayon formé par les moyens de guidage de rayon est aussi large que possible tout en étant plus étroit que la plus grande dimension (b) de la tête de rayon perpendiculaire à la tige, de telle sorte que le rayon est empêché de tourner dans le canal.

3. Dispositif d'introduction de rayons selon la revendication 1 ou 2, **caractérisé en ce que** le moyen d'application comprend un élément élastique (76) tels que, par exemple, un ressort à lame.

4. Dispositif d'introduction de rayons selon la revendication 1, 2 ou 3, **caractérisé en ce que** le support de rayon (77) est positionné au-dessus de l'élément élastique.

5. Dispositif d'introduction de rayons selon l'une des revendications précédentes, **caractérisé en ce que**, du côté d'entraînement sur lequel le rayon est saisi, les dimensions du canal de rayon sont approximativement de 5 x 8 mm.

6. Dispositif d'introduction de rayons selon l'une des revendications précédentes, **caractérisé en ce que**, du côté d'entraînement le canal de rayon comporte des moyens de guidage mobile (67) destinés à fermer et à ouvrir le canal de rayon de son côté d'extrémité.

7. Dispositif d'introduction de rayons selon l'une des revendications précédentes, **caractérisé en ce que**, sur une distance d'au moins 40 mm par rapport à l'ouverture d'éjection, les moyens de guidage de rayon sont formés par une paroi qui, du côté face au moyeu, présente une épaisseur inférieure à 0,5 à 1,0 mm.

8. Dispositif d'introduction de rayons selon l'une des revendications précédentes, **caractérisé en ce que**, sur une distance d'au moins 80 mm de l'ouverture d'éjection, les moyens de guidage de rayon sont formés par une paroi qui, du côté face au moyeu, présente une épaisseur inférieure à 0,5 à 1,0 mm.

9. Dispositif d'introduction de rayons selon l'une des revendications précédentes, **caractérisé en ce qu'**un élément de retournement de rayon (69, 70) est placé entre le moyen de tri de rayon et le support de rayon, afin de retourner la tête d'un rayon isolé vers le bas.

10. Dispositif d'introduction de rayons selon la revendication 9, **caractérisé en ce que** l'élément de retournement de rayon comprend un moyen de saisie (68) d'un rayon isolé, et un moyen d'alignement (69) pouvant se déplacer vers la tête du rayon saisi.

11. Dispositif d'introduction de rayons selon l'une des revendications précédentes, **caractérisé en ce que** les moyeux (1) sont transférés vers le support de moyeu (3) par un moyen formant convoyeur (17, 56) comprenant un élément de saisie (56).

12. Dispositif d'introduction de rayons selon la revendication 11, **caractérisé en ce que** l'élément de saisie comporte un moyen de blocage (49 à 53) pour une bride de moyeu (78).

13. Dispositif d'introduction de rayons selon l'une des revendications précédentes, dans lequel le moyen d'entraînement en rotation comprend un rouleau d'entraînement (18, 19) en appui contre la bride de moyeu (78), **caractérisé en ce que**, pour chaque bride de moyeu (78). les moyens de guidage de rayon, les ouvertures d'éjecteur et les capteurs respectifs (35, 37, 39, 41) sont orientés au niveau d'un orifice de positionnement (P, Q) qui est situé sur un plan horizontal à travers l'axe de moyeu (2), et le rouleau d'entraînement (18, 19) est en appui contre la bride de moyeu (78) au-dessus dudit plan horizontal.

14. Dispositif d'introduction de rayons selon la revendication 13, **caractérisé en ce que** le rouleau d'entraînement applique la bride de moyeu (78) dans une direction de 45 à 75 degrés approximativement par rapport au plan horizontal.

15. Dispositif d'introduction de rayons selon l'une des revendications précédentes, **caractérisé en ce que** le support de moyeu (3) comprend deux supports d'axe, parmi lesquels un premier support d'axe peut être réglé à une position qui dépend des dimensions d'un moyeu (1), et parmi lesquels un second support d'axe, au moyen d'un dispositif d'entraînement de support (7), applique chaque moyeu (1) à charger contre un premier support d'axe.

16. Dispositif d'introduction de rayons selon l'une des revendications précédentes, **caractérisé en ce que** deux éléments d'introduction de rayon (21, 22) et le capteur respectif sont situés à un emplacement fixe par rapport au support de moyeu (3), alors que deux éléments d'introduction de rayon (25, 27) et le capteur respectif peuvent être déplacés par le moyen formant convoyeur (28, 33), la distance entre les éléments d'introduction de rayon restant constante.

17. Procédé destiné à introduire des rayons (S) dans des orifices (81) d'une bride de moyeu (78) d'un moyeu (1) utilisant un dispositif selon l'une des revendications précédentes, le support de moyeu (3) de maintien horizontal, la bride de moyeu étant placée de chaque côté des éléments d'introduction de rayon (21, 22, 25, 27), dans lequel, au moyen des éléments de tri de rayon (57), un rayon (S) présentant une tête à angle droit et une tige est isolé et saisi dans l'élément support de rayon (34, 36, 38, 40), lequel, au cours de l'introduction, guide le rayon à l'aide des moyens de guidage de rayon (66, 67, 74, 77, 79), achevant l'ouverture d'éjecteur, alors que, après que l'orifice (81) et l'ouverture d'éjecteur ont été positionnés l'un par rapport à l'autre à l'aide d'un capteur et du moyen de commande de manière à aligner sensiblement l'orifice (81) avec la tige du rayon, le moyen d'entraînement (71, 73, 75) pousse le rayon à partir de l'ouverture d'éjecteur à travers l'orifice (81) dans la bride de moyeu (78), l'ouverture d'éjecteur est déplacée vers la bride de moyeu (78) sur une distance (a) depuis la bride de moyeu qui est inférieure au diamètre de la tête du rayon, après quoi le rayon (S) est inséré à travers l'orifice (81) dans la bride de moyeu (78) tout en assurant, par guidage de la tête jusqu'à ce qu'elle vienne en butée contre la bride de moyeu (78), que, pendant l'introduction, la tête reste orientée vers le bas.

18. Procédé selon la revendication 17, dans lequel, après qu'un rayon (S) a été inséré dans un orifice (81) de la première bride de moyeu (78), un orifice suivant (81) sur la seconde bride de moyeu (78) est placé avant la position d'introduction en faisant tourner le moyeu (1) de manière à déplacer le rayon inséré vers le bas, **caractérisé en ce que**, avant tout, le moyeu (1) est tourné sur 0,5 à 1 fois le diamètre d'orifice dans le sens opposé.
